# EUROPÄISCHE PATENTANMELDUNG

(11) **EP 3 670 873 A1**
(43) Veröffentlichungstag der Anmeldung: **24.06.2020**
(21) Anmeldenummer: 19211798.4
(22) Anmeldetag: 27.11.2019
(51) Int. Cl.: F02C 7/36, F02K 3/06, F16C 1/02

(54) **WELLE EINES GASTURBINENTRIEBWERKES**

(30) Priorität: 18.12.2018 DE 102018132675
(71) Anmelder: Rolls-Royce Deutschland Ltd & Co KG, 15827 Blankenfelde-Mahlow (DE)
(72) Erfinder: PETERSEN, Björn, 15827 Blankenfelde-Mahlow (DE); WALKER, Philip Brian, 15827 Blankenfelde-Mahlow (DE)
(74) Vertreter: Maikowski & Ninnemann Patentanwälte Partnerschaft mbB

(57) **Zusammenfassung**

Die Erfindung betrifft ein Gasturbinentriebwerk (10) für ein Luftfahrzeug, das Folgendes umfasst:
ein Kerntriebwerk (11), das eine Turbine (19), einen Verdichter (14) und eine die Turbine mit dem Verdichter verbindende Kernwelle (26) umfasst;
einen Fan (23), der stromaufwärts des Kerntriebwerks (11) positioniert ist, wobei der Fan (23) mehrere Fanschaufeln umfasst; und
ein Getriebe (30), das von der Kernwelle (26) antreibbar ist, wobei der Fan (23) mittels des Getriebes (30) mit einer niedrigeren Drehzahl als die Kernwelle (26) antreibbar ist,
dadurch gekennzeichnet, dass
die Kernwelle (26) als Antriebswelle für das Getriebe (30) ausgebildet ist und mindestens einen axialen ersten Bereich (51) aufweist, der einen Durchmesser (D1) aufweist, der größer ist als der Durchmesser (D2) mindestens eines axialen zweiten Bereichs (52), wobei der mindestens eine erste Bereich (51) axial zwischen der Antriebseite des Getriebes (30) und einer Lagerung und / oder Anbindung (60) an ein statisches Teil (61) des Gasturbinentriebwerks (10) angeordnet ist.

## Beschreibung

Die vorliegende Offenbarung bezieht sich auf ein Gasturbinentriebwerk mit den Merkmalen des Anspruchs 1.

In Gasturbinentriebwerken, insbesondere in Fangetriebe-Triebwerken von Flugzeugen, werden Umlaufgetriebe (Planetengetriebe) verwendet, um die relativ hohen Drehzahlen einer Turbine zum Antrieb eines Fans des Triebwerks herabzusetzen. Die Anbindung der Antriebswelle an das Getriebe ist besonderen Belastungen unterworfen. Eine Antriebswelle ist z.B. aus der EP 3 306 116 A1 bekannt.

Es besteht daher die Aufgabe, entsprechend angepasste Gasturbinentriebwerke bereitzustellen.

Diese Aufgabe wird durch ein Gasturbinentriebwerk mit den Merkmalen des Anspruchs 1 gelöst.

Das Gasturbinentriebwerk umfasst dabei ein Kerntriebwerk, mit einer Turbine, einen Verdichter und eine die Turbine mit dem Verdichter verbindende Kernwelle. Ferner weist das Gasturbinentriebwerk einen Fan auf, der stromaufwärts des Kerntriebwerks positioniert ist, wobei der Fan mehrere Fanschaufeln umfasst. Ein Getriebe ist von der Kernwelle antreibbar, wobei der Fan mittels des Getriebes mit einer niedrigeren Drehzahl als die Kernwelle antreibbar ist. Dies bedeutet, dass die Drehzahl des Fans geringer als die Drehzahl der antreibenden Turbine ist.

Die Kernwelle ist als Antriebswelle für das Getriebe ausgebildet und weist mindestens einen axialen ersten Bereich auf, der einen Durchmesser aufweist, der größer ist als der Durchmesser mindestens eines axialen zweiten Bereichs, wobei der mindestens eine erste Bereich axial zwischen der Antriebseite des Getriebes und einer Lagerung und / oder Anbindung an ein statisches Teil des Gasturbinentriebwerks angeordnet ist.

Somit weist die Kernwelle eine gezielte Aufweitung, d.h. Vergrößerung des Durchmessers, auf. Dadurch ist es möglich, die Wanddicke der Kernwelle in den unterschiedlichen Bereichen anzupassen, um z.B. eine besonders biegeelastische Kernwellenanordnung zu erhalten.

Dabei kann die Kernwelle genau einen ersten Bereich aufweisen, d.h. genau einen Bereich, in dem der Durchmesser gezielt vergrößert wurde. So kann insbesondere fast der ganze Bereich zwischen Antriebsseite des Getriebes und der statischen Anbindung als erster Bereich mit einem vergrößerten Durchmesser ausgeführt sein.

Alternativ kann die Kernwelle eine Mehrzahl von Bereichen mit unterschiedlichen Durchmessern aufweisen. Dies kann insbesondere bei komplexeren Einbauräumen im Kerntriebwerk vorteilhaft sein.

Auch ist es möglich, dass der Durchmesser des mindestens einen ersten Bereiches konstant ist oder sich innerhalb des Bereiches ändert. Damit könnte der mindestens eine Bereich z.B. konisch ausgebildet sein.

Die Lagerung und / oder Anbindung an den statischen Teil kann axial im Bereich des Niederdruckverdichters des Gasturbinentriebwerks angeordnet sein. So kann die Lagerung und / oder Anbindung an den statischen Teil im Bereich eines Hubs (Lagernabe) angeordnet sein. Auch kann die Lagerung und / oder die Anbindung an den statischen Teil mindestens ein Wälzlager, insbesondere ein Rollenlager, aufweisen. Der statische Teil kann z.B. als ein Teil eines Gehäuses für das Getriebe und / oder als ein Teil des Kerntriebwerkes ausgeführt sein.

In Anpassung des verfügbaren Bauraums kann in einer Ausführungsform der Durchmesser der Kernwelle an der Verbindung der Kernwelle zum Getriebe kleiner sein als der Durchmesser des zweiten Bereiches, d.h. damit ist dieser Durchmesser auch kleiner als der des ersten Bereichs.

Zwischen den Bereichen mit unterschiedlichen Durchmessern befinden sich Übergangsbereiche, die grundsätzlich eine radiale Ausdehnung haben. Dabei kann mindestens ein Übergangsbereich zwischen den Bereichen mit unterschiedlichen Durchmessern durch einen radial senkrechten Wellenteil gebildet sein. Dabei entstehen senkrechte Stufen in der Kernwelle. Mindestens ein Übergangsbereich zwischen den Bereichen mit unterschiedlichen Durchmessern kann durch einen Wellenteil gebildet werden, der gegenüber der Hauptdrehachse um 1 bis 15° geneigt ist, d.h. der Absatz zwischen den Bereichen ist leicht geneigt. Grundsätzlich können in einer Kernwelle auch unterschiedlich geformte Übergangsbereiche eingesetzt werden.

In einer weiteren Ausführungsform beträgt die axiale Erstreckung des mindestens einen ersten Bereichs mehr als 50%, insbesondere mehr als 80%, der axialen Erstreckung der Kernwelle zwischen dem Getriebe und der Lagerung und / oder Anbindung an das statische Teil. Damit ist ein Großteil der Kernwelle zum Getriebe hin aufgeweitet.

Auch kann die Wanddicke der Kernwelle im mindestens einen ersten Bereich dünner ausgebildet sein, als in mindestens einem anderen Bereich der Kernwelle, insbesondere dünner als im mindestens einen zweiten Bereich der Kernwelle. Je weiter die Kernwelle aufgeweitet ist, desto dünner kann die Wandstärke ausgebildet werden. So kann z.B. die Wanddicke des ersten Bereiches mindestens um einen Faktor 1,5, insbesondere einen Faktor 2, kleiner sein als die Wanddicke in einem anderen Bereich der Kernwelle, insbesondere als im mindestens einen zweiten Bereich.

Ferner kann in einer Ausführungsform das Verhältnis der Wanddicke des ersten Bereichs zur axialen Länge des ersten Bereichs im Bereich zwischen 0,02 und 0,08 liegen. Zusätzlich oder alternativ kann das Verhältnis der Wanddicke des zweiten Bereichs zur axialen Länge des zweiten Bereichs im Bereich zwischen 0,05 und 0,1 liegen.

Wie hier an anderer Stelle angeführt wird, kann sich die vorliegende Offenbarung auf ein Gasturbinentriebwerk, z.B. ein Flugzeugtriebwerk, beziehen. Solch ein Gasturbinentriebwerk kann ein Kerntriebwerk umfassen, das eine Turbine, eine Brennervorrichtung, einen Verdichter und eine die Turbine mit dem Verdichter verbindende Kernwelle umfasst. Solch ein Gasturbinentriebwerk kann einen Fan (mit Fanschaufeln) umfassen, der stromaufwärts des Kerntriebwerks positioniert ist.

Anordnungen der vorliegenden Offenbarung können insbesondere, jedoch nicht ausschließlich, für Getriebe-Fans, die über ein Getriebe angetrieben werden, von Vorteil sein. Entsprechend kann das Gasturbinentriebwerk ein Getriebe umfassen, das über die Kernwelle angetrieben wird und dessen Abtrieb den Fan so antreibt, dass er eine niedrigere Drehzahl als die Kernwelle aufweist. Der Eingang für das Getriebe kann direkt von der Kernwelle oder indirekt über die Kernwelle, beispielsweise über eine Stirnwelle und / oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich der Fan mit einer niedrigeren Drehzahl dreht).

Das Gasturbinentriebwerk, das hier beschrieben und / oder beansprucht wird, kann eine beliebige, geeignete allgemeine Architektur aufweisen. Beispielsweise kann das Gasturbinentriebwerk eine beliebige gewünschte Anzahl an Wellen aufweisen, die Turbinen und Verdichter verbinden, beispielsweise eine, zwei oder drei Wellen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Das Kerntriebwerk kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei einer solchen Anordnung kann der zweite Verdichter axial stromabwärts des ersten Verdichters positioniert sein. Der zweite Verdichter kann dahingehend angeordnet sein, eine Strömung von dem ersten Verdichter aufzunehmen (beispielsweise direkt aufzunehmen, beispielsweise über einen generell ringförmigen Kanal).

Das Getriebe kann dahingehend ausgebildet sein, dass es von der Kernwelle angetrieben wird, die dazu konfiguriert ist, sich (beispielsweise im Gebrauch) mit der niedrigsten Drehzahl zu drehen (beispielsweise die erste Kernwelle in dem obigen Beispiel). Beispielsweise kann das Getriebe dahingehend ausgebildet sein, dass es lediglich von der Kernwelle angetrieben wird, die dazu konfiguriert ist, sich (beispielsweise im Gebrauch) mit der niedrigsten Drehzahl zu drehen (beispielsweise nur von der ersten Kernwelle und nicht der zweiten Kernwelle bei dem obigen Beispiel). Alternativ dazu kann das Getriebe dahingehend ausgebildet sein, dass es von einer oder mehreren Wellen angetrieben wird, beispielsweise der ersten und / oder der zweiten Welle in dem obigen Beispiel.

Bei einem Gasturbinentriebwerk, das hier beschrieben und / oder beansprucht wird, kann eine Brennvorrichtung axial stromabwärts des Fans und des Verdichters (oder der Verdichter) vorgesehen sein. Beispielsweise kann die Brennervorrichtung direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Die Brennervorrichtung kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen, bei denen es sich um variable Statorschaufeln handeln kann (d.h. der Anstellwinkel kann variabel sein). Die Reihe von Rotorschaufeln und die Reihe von Statorschaufeln können axial zueinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial zueinander versetzt sein.

Jede Fanschaufel kann eine radiale Spannweite aufweisen, die sich von einem Fuß (oder einer Nabe) an einer radial innenliegenden, von Gas überströmten Stelle oder sich von einer Position einer Spannweite von 0 % zu einer Spitze mit einer Spannweite von 100 % erstreckt. Das Verhältnis des Radius der Fanschaufel an der Nabe zu dem Radius der Fanschaufel an der Spitze kann bei weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Fanschaufel an der Nabe zu dem Radius der Fanschaufel an der Spitze kann in einem abgeschlossenen Bereich liegen, der von zwei Werten im vorhergehenden Satz begrenzt wird (d. h. die Werte können die obere oder untere Grenzen bilden). Diese Verhältnisse können allgemeinhin als das Nabe-Spitze-Verhältnis bezeichnet werden. Der Radius an der Nabe und der Radius an der Spitze können beide an der vorderen Kante (oder der axial am weitesten vorne liegenden Kante) der Schaufel gemessen werden. Das Nabe-Spitze-Verhältnis bezieht sich natürlich auf den von Gas überströmten Abschnitt der Fanschaufel, d. h. den Abschnitt, der sich radial außerhalb jeglicher Plattform befindet.

Der Radius des Fans kann zwischen der Mittellinie des Triebwerks und der Spitze der Fanschaufel an ihrer vorderen Kante gemessen werden. Der Durchmesser des Fans (der allgemein das Doppelte des Radius des Fans sein kann) kann größer als (oder in der Größenordnung von): 250 cm (etwa 100 Inch), 260 cm (etwa 102 Inch), 270 cm (etwa 105 Inch), 280 cm (etwa 110 Inch), 290 cm (etwa 115 Inch), 300 cm (etwa 120 Inch), 310 cm (etwa 122 Inch), 320 cm (etwa 125 Inch), 330 cm (etwa 130 Inch), 340 cm (etwa 135 Inch), 350 cm (etwa 138 Inch), 360 cm (etwa 140 Inch), 370 cm (etwa 145 Inch), 380 cm (etwa 150 Inch) oder 390 cm (etwa 155 Inch) sein (liegen). Der Fandurchmesser kann in einem abgeschlossenen Bereich liegen, der von zweien der Werte im vorhergehenden Satz begrenzt wird (d. h. die Werte können die obere oder untere Grenzen bilden).

Die Drehzahl des Fans kann im Betrieb variieren. Allgemein ist die Drehzahl geringer für Fans mit einem größeren Durchmesser. Lediglich als ein nicht einschränkendes Beispiel kann die Drehzahl des Fans bei Konstantgeschwindigkeitsbedingungen weniger als 2500 U/min, beispielsweise weniger als 2300 U/min, betragen. Lediglich als ein weiteres, nicht einschränkendes Beispiel kann auch die Drehzahl des Fans bei Konstantgeschwindigkeitsbedingungen für ein Triebwerk mit einem Fandurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres, nicht einschränkendes Beispiel kann die Drehzahl des Fans bei Konstantgeschwindigkeitsbedingungen für ein Triebwerk mit einem Fandurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich der Fan (mit zugehörigen Fanschaufeln) um eine Drehachse. Diese Drehung führt dazu, dass sich die Spitze der Fanschaufel mit einer Geschwindigkeit U_{Spitze} bewegt. Die von den Fanschaufeln an der Strömung verrichtete Arbeit resultiert in einem Anstieg der Enthalpie dH der Strömung. Eine Fanspitzenbelastung kann als dH/U_{Spitze}² definiert werden, wobei dH der Enthalpieanstieg (beispielsweise der durchschnittliche 1-D-Enthalpieanstieg) über den Fan hinweg ist und U_{Spitze} die (Translations-) Geschwindigkeit der Fanspitze, beispielsweise an der vorderen Kante der Spitze, ist (die als Fanspitzenradius am vorderen Rand multipliziert mit der Winkelgeschwindigkeit definiert werden kann). Die Fanspitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt J kg⁻¹K⁻¹/(ms⁻¹)² sind). Die Fanspitzenbelastung kann in einem abgeschlossenen Bereich liegen, der von zweien der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (oder in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem abgeschlossenen Bereich liegen, der von zweien der Werte im vorhergehenden Satz begrenzt wird (d. h. die Werte können die obere oder untere Grenzen bilden). Der Bypasskanal kann im Wesentlichen ringförmig sein. Der Bypasskanal kann sich radial außerhalb des Kerntriebwerks befinden. Die radial äußere Fläche des Bypasskanals kann durch eine Triebwerksgondel und / oder ein Fangehäuse definiert werden.

Das Gesamtdruckverhältnis eines Gasturbinentriebwerks, das hier beschrieben und / oder beansprucht wird, kann als das Verhältnis des Staudrucks stromaufwärts des Fans zu dem Staudruck am Ausgang des Höchstdruckverdichters (vor dem Eingang in die Brennervorrichtung) definiert werden. Als ein nicht einschränkendes Beispiel kann das Gesamtdruckverhältnis eines Gasturbinentriebwerks, das hier beschrieben und / oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem abgeschlossenen Bereich liegen, der von zweien der Werte im vorhergehenden Satz begrenzt wird (d. h. die Werte können die obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 N kg⁻¹ s, 105 N kg⁻¹ s, 100 N kg⁻¹ s, 95 N kg⁻¹ s, 90 N kg⁻¹ s, 85 N kg⁻¹ s oder 80 N kg⁻¹ s betragen (liegen). Der spezifische Schub kann in einem abgeschlossenen Bereich liegen, der von zweien der Werte im vorhergehenden Satz begrenzt wird (d. h. die Werte können die obere oder untere Grenzen bilden). Solche Triebwerke können im Vergleich zu herkömmlichen Gasturbinentriebwerken besonders effizient sein.

Ein Gasturbinentriebwerk, das hier beschrieben und / oder beansprucht wird, kann einen beliebigen gewünschten Höchstschub aufweisen. Lediglich als ein nicht einschränkendes Beispiel kann eine Gasturbine, die hier beschrieben und / oder beansprucht wird, zur Erzeugung eines Höchstschubs von mindestens (oder in der Größenordnung von): 160 kN, 170 kN, 180 kN, 190 kN, 200 kN, 250 kN, 300 kN, 350 kN, 400 kN, 450 kN, 500 kN oder 550kN in der Lage sein. Der Höchstschub kann in einem abgeschlossenen Bereich liegen, der von zweien der Werte im vorhergehenden Satz begrenzt wird (d. h. die Werte können die obere oder untere Grenzen bilden). Der Schub, auf den oben Bezug genommen wird, kann der Nettohöchstschub bei standardmäßigen atmosphärischen Bedingungen auf Meereshöhe plus 15 °C (Umgebungsdruck 101,3 kPa, Temperatur 30 °C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zur Brennvorrichtung, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400 K, 1450 K, 1500 K, 1550 K, 1600 K oder 1650 K betragen (liegen). Die TET bei Konstantgeschwindigkeit kann in einem abgeschlossenen Bereich liegen, der von zweien der Werte im vorhergehenden Satz begrenzt wird (d. h. die Werte können die obere oder untere Grenzen bilden). Die maximale TET im Gebrauch des Triebwerks kann beispielsweise mindestens (oder in der Größenordnung von): 1700 K, 1750 K, 1800 K, 1850 K, 1900 K, 1950 K oder 2000 K betragen (liegen). Die maximale TET kann in einem abgeschlossenen Bereich liegen, der von zweien der Werte im vorhergehenden Satz begrenzt wird (d. h. die Werte können die obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Fanschaufel und / oder ein Blattabschnitt (aerofoil) einer Fanschaufel, die hier beschrieben und / oder beansprucht wird, kann aus einem beliebigen geeigneten Material oder einer Kombination aus Materialien hergestellt werden. Beispielsweise kann zumindest ein Teil der Fanschaufel und / oder des Blatts zumindest zum Teil aus einem Verbundstoff, beispielsweise einem Metallmatrix-Verbundstoff und / oder einem Verbundstoff mit organischer Matrix, wie z. B. Kohlefaser, hergestellt werden. Als ein weiteres Beispiel kann zumindest ein Teil der Fanschaufel und / oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material, hergestellt werden. Die Fanschaufel kann mindestens zwei Bereiche umfassen, die unter Verwendung verschiedener Materialien hergestellt werden. Beispielsweise kann die Fanschaufel eine vordere Schutzkante aufweisen, die unter Verwendung eines Materials hergestellt wird, das dem Aufschlagen (beispielsweise von Vögeln, Eis oder anderem Material) besser widerstehen kann als der Rest der Schaufel. Solch eine vordere Kante kann beispielsweise unter Verwendung von Titan oder einer auf Titan basierenden Legierung hergestellt werden. Somit kann die Fanschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Fan, der hier beschrieben und / oder beansprucht wird, kann einen mittleren Abschnitt umfassen, von dem sich die Fanschaufeln, beispielsweise in einer radialen Richtung, erstrecken können. Die Fanschaufeln können auf beliebige gewünschte Art und Weise an dem mittleren Abschnitt angebracht sein. Beispielsweise kann jede Fanschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Fanschaufel an der Nabe/Scheibe in einen entsprechenden Schlitz in der Nabe/Scheibe eingesteckt und / oder damit in Eingriff gebracht werden kann. Als ein weiteres Beispiel können die Fanschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Fanschaufeln aus einem Block maschinell herausgearbeitet werden und / oder mindestens ein Teil der Fanschaufeln kann durch Schweißen, wie z. B. lineares

Reibschweißen, an der Nabe/Scheibe angebracht werden.

Die Gasturbinentriebwerke, die hier beschrieben und / oder beansprucht werden, können oder können nicht mit einer VAN (Variable Area Nozzle - Düse mit variablem Querschnitt) versehen sein. Solch eine Düse mit variablem Querschnitt kann im Betrieb eine Variation des Ausgangsquerschnitts des Bypasskanals erlauben. Die allgemeinen Prinzipien der vorliegenden Offenbarung können auf Triebwerke mit oder ohne eine VAN zutreffen.

Der Fan einer Gasturbine, die hier beschrieben und / oder beansprucht wird, kann eine beliebige gewünschte Anzahl an Fanschaufeln, beispielsweise 16, 18, 20 oder 22 Fanschaufeln, aufweisen.

Gemäß der hier erfolgenden Verwendung können Konstantgeschwindigkeitsbedingungen die Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und / oder das Triebwerk zwischen (hinsichtlich Zeit und / oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantgeschwindigkeitsbedingung sein. Bei einigen Luftfahrzeugen kann die Konstantgeschwindigkeitsbedingung außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe entsprechen, die im Bereich von 10.000 m bis 15.000 m, beispielsweise im Bereich von 10.000 m bis 12.000 m, beispielsweise im Bereich von 10.400 m bis 11.600 m (etwa 38.000 Fuß), beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 °C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Fanbetrieb ausgelegt ist, entsprechen. Dies kann beispielsweise die Bedingungen, bei denen der Fan (oder das Gasturbinentriebwerk) konstruktionsgemäß den optimalen Wirkungsgrad aufweist, bedeuten.

Im Betrieb kann ein Gasturbinentriebwerk, das hier beschrieben und / oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise zwei oder vier) Gasturbinentriebwerk(e) zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und / oder mit einem beliebigen anderen Merkmal oder Parameter, das bzw. der hier beschrieben wird, kombiniert werden, sofern sie sich nicht gegenseitig ausschließen.

Es werden nun beispielhaft Ausführungsformen mit Bezug auf die Figuren beschrieben; in den Figuren zeigen:
Figur 1 eine Seitenschnittansicht eines Gasturbinentriebwerks;
Figur 2 eine Seitenschnittgroßansicht eines stromaufwärtigen Abschnitts eines Gasturbinentriebwerks;
Figur 3 eine zum Teil weggeschnittene Ansicht eines Getriebes für ein Gasturbinentriebwerk;
Figur 4 eine Schnittansicht durch einen Teil einer Ausführungsform einer Kernwelle.

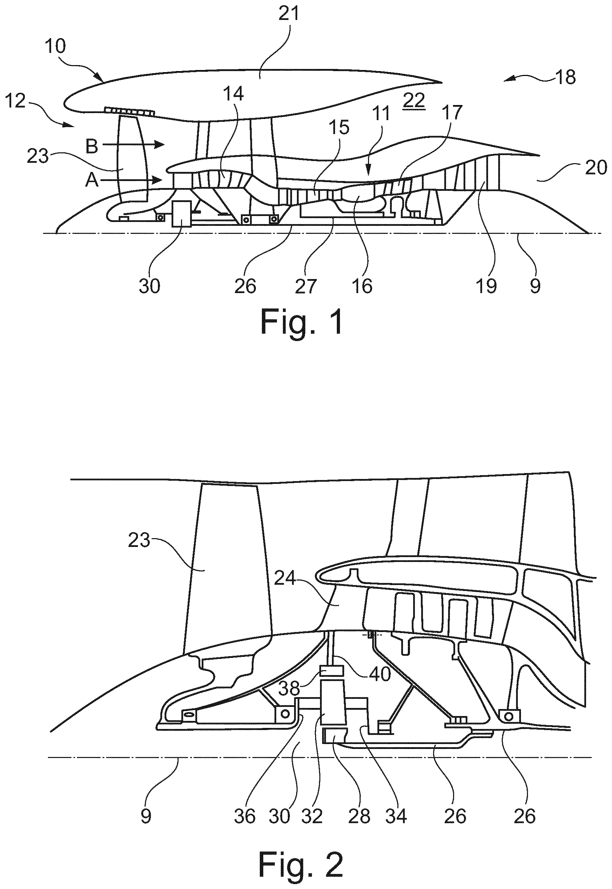

Figur 1 stellt ein Gasturbinentriebwerk 10 mit einer Hauptdrehachse 9 dar. Das Gasturbinentriebwerk 10 umfasst einen Lufteinlass 12 und einen Fan 23, der zwei Luftströme erzeugt: einen Kernluftstrom A und einen Bypassluftstrom B. Das Gasturbinentriebwerk 10 umfasst einen Kern 11, der den Kernluftstrom A aufnimmt. Das Kerntriebwerk 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Der Fan 23 ist über eine Welle 26 und ein epizyklisches Planetengetriebe 30 an der Niederdruckturbine 19 angebracht und wird durch diese angetrieben.

Im Betrieb wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Der Fan 23 stellt allgemein den Hauptteil der Schubkraft bereit. Das epizyklische Planetengetriebe 30 ist ein Untersetzungsgetriebe.

Eine beispielhafte Anordnung für ein Getriebe-Fan-Gasturbinentriebwerk 10 wird in Figur 2 gezeigt. Die Niederdruckturbine 19 (siehe Figur 1) treibt die Welle 26 an, die mit einem Sonnenrad 28 des epizyklischen Planetengetriebes 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 führt die Planetenräder 32 so, dass sie synchron um das Sonnenrad 28 kreisen, während er ermöglicht, dass sich jedes Planetenrad 32 um seine eigene Achse drehen kann. Der Planetenträger 34 ist über Gestänge 36 mit dem Fan 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht den Fan 23 umfassen) und/oder die Turbinen- und Verdichterstufe, die durch die verbindende Welle 26 mit der niedrigsten Drehzahl in dem Triebwerk (d. h. dass sie nicht die Getriebeausgangswelle, die den Fan 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann der Fan 23 als eine erste Verdichtungsstufe oder Verdichtungsstufe mit dem niedrigsten Druck bezeichnet werden.

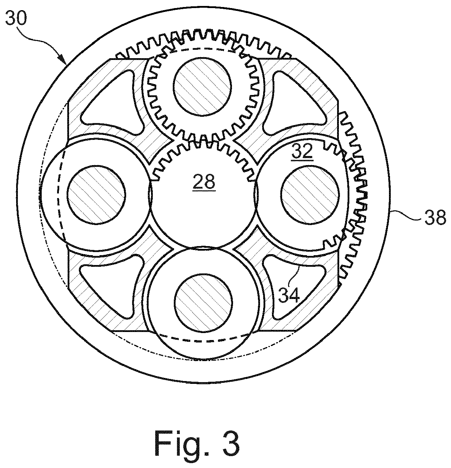

Das epizyklische Planetengetriebe 30 wird in Figur 3 beispielhaft genauer gezeigt. Das Sonnenrad 28, die Planetenräder 32 und das Hohlrad 38 umfassen jeweils Zähne an ihrem Umfang, um ein Kämmen mit den anderen Zahnrädern zu ermöglichen. Jedoch werden der Übersichtlichkeit halber lediglich beispielhafte Abschnitte der Zähne in Figur 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines epizyklischen Planetengetriebes 30 umfassen allgemein mindestens drei Planetenräder 32.

Das in Figur 2 und 3 beispielhaft dargestellte epizyklische Planetengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Planetengetrieben 30 verwendet werden. Als ein weiteres Beispiel kann das Planetengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird der Fan 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige, geeignete Anordnung zur Positionierung des Getriebes 30 in dem Gasturbinentriebwerk 10 und / oder zur Verbindung des Getriebes 30 mit dem Gasturbinentriebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Gasturbinentriebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Gasturbinentriebwerks 10 (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder epizyklisch planetenartig), Stützstrukturen, Eingangs- und Ausgangswellenanordnung und Lagerpositionierungen aus.

Optional kann das Getriebe Neben- und / oder alternative Komponenten (z. B. den Mitteldruckverdichter und / oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und / oder Turbinen und / oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) können einen festgelegten oder variablen Bereich aufweisen. Obgleich sich das beschriebene Beispiel auf ein Turbofantriebwerk bezieht, kann die Offenbarung beispielsweise bei einer beliebigen Art von Gasturbinentriebwerk, wie z. B. bei einem Open-Rotor- (bei dem die Fanstufe nicht von einer Triebwerksgondel umgeben wird) oder einem Turboprop-Triebwerk, angewendet werden. Bei einigen Anordnungen umfasst das Gasturbinentriebwerk 10 möglicherweise kein Getriebe 30.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

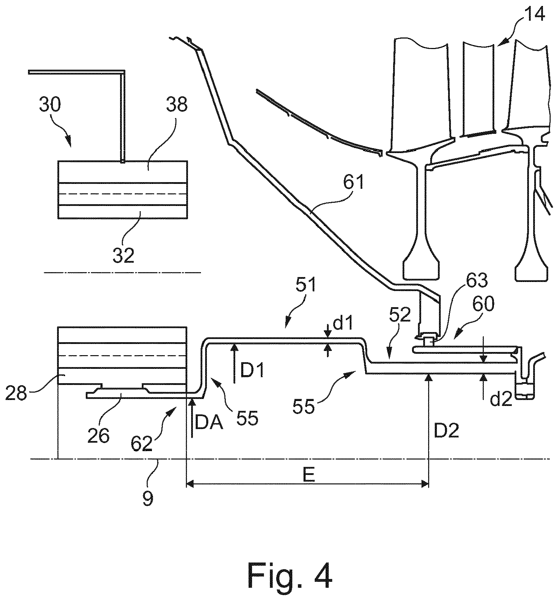

In der Figur 4 ist ein Teil eines Gasturbinentriebwerks 10 mit einem Getriebe 30 dargestellt. Dabei ist vor allem der Bereich der Kernwelle 26 als Antriebswelle für das Getriebe 30 dargestellt.

In axialer Ausdehnung ist vor allem der Bereich 62 zwischen der Verbindung der Kernwelle 26 mit dem Getriebe 30 und einer Anbindung 60 der Kernwelle 26 mit einem statischen Teil 61 des Gasturbinentriebwerks 10 dargestellt, d.h. der Bereich der Kernwelle 26, der sich bis in den Bereich des Niederdruckverdichters 14 erstreckt. Im Bereich der Anbindung an das statische Teil 61 ist hier ein Rollenlager 63 angeordnet.

Die Kernwelle 26 weist hier entlang der axialen Erstreckung Bereiche 51, 52, 62 mit unterschiedlichen Durchmessern D1, D2, DA auf.

Ein axialer erster Bereich 51 weist einen Durchmesser D1 auf, der größer ist als der Durchmesser D2 eines axialen zweiten Bereichs 52, wobei der erste Bereich 51 axial zwischen der Antriebseite des Getriebes 30 und der Lagerung und / oder Anbindung 60 an den statischen Teil 61 angeordnet ist. Der erste Bereich 51 weist auch einen größeren Durchmesser D1 auf als der Verbindungsbereich 62 von Kernwelle 26 und Getriebe 30. Der dortige Durchmesser DA ist sogar geringer als der Durchmesser D2 des zweiten Bereichs 52. Der Durchmesser D1 ist hier in axialer Erstreckung kontant. In einer alternativen Ausführungsform kann der Durchmesser D1 sich in axialer Richtung ändern, indem er z.B. eine konische Form annimmt.

Die axiale Erstreckung des ersten Bereichs 51 beträgt mehr als 50%, im vorliegenden Fall ca. 66%, der axialen Erstreckung E zwischen dem Getriebe 30 und der Lagerung und / oder Anbindung 60 an das statische Teil 61.

Der erste Bereich 51 befindet sich damit in einem Bereich des Getriebegehäuses, von dem das statische Teil 61 ein Bestandteil ist, indem in radialer Richtung mehr Bauraum besteht, als z.B. weiter hinten im Gasturbinentriebwerk 10, z.B. im Bereich des Niederdruckverdichters 14.

Die Vergrößerung des Durchmessers D1 des ersten Bereichs 51 gegen über dem zweiten Bereich 52 erlaubt eine Verringerung der Wanddicke d1 im ersten Bereich 51 gegenüber anderen Stellen der Kernwelle 26, z.B. der Wanddicke d2 im zweiten Bereich 52. Durch die Verringerung der Wanddicke kann Gewicht eingespart werden. Zusätzlich erlaubt die Vergrößerung des Durchmessers im ersten Bereich eine biegsamere Welle, welche dieser Anwendung vorteilhaft ist. Damit kann eine effiziente Entkopllung des Fan-Getriebes 30 von möglichen Lasten der stromabwärts positionierten Kompressoren 14 erfolgen,

In der dargestellten Ausführungsform ist die Wanddicke d1 des ersten Bereiches 51 doppelt so groß, wie die Wanddicke des zweiten Bereiches 52.

Das Verhältnis der Wanddicke d1 des ersten Bereiches 51 zur axialen Erstreckung des ersten Bereiches 51 beträgt in der dargestellten Ausführungsform 0,03.

Das Verhältnis der Wanddicke d2 des ersten Bereiches 52 zur axialen Erstreckung des zweiten Bereiches 52 beträgt in der dargestellten Ausführungsform 0,07.

In alternativen Ausführungsformen kann von diesen Maßangaben abgewichen werden.

Zwischen den axialen Bereichen 51, 52, 62 gibt es Übergangsbereiche 55, in denen die Kernwelle 26 radiale Übergänge bildet. Diese Übergangsbereiche 55 können senkrecht zur Hauptdrehachse 9 ausgebildet sein oder, wie in der dargestellten Ausführungsform geneigt (gegenüber der Hauptdrehachse 9). Die Neigung kann z.B. im Bereich zwischen 1 und 15° liegen.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Beliebige der Merkmale können separat oder in Kombination mit beliebigen anderen Merkmalen eingesetzt werden, sofern sie sich nicht gegenseitig ausschließen, und die Offenbarung dehnt sich auf alle Kombinationen und Unterkombinationen eines oder mehrerer Merkmale, die hier beschrieben werden, aus und umfasst diese.

### Bezugszeichenliste

- 9: Hauptdrehachse
- 10: Gasturbinentriebwerk
- 11: Kerntriebwerk
- 12: Lufteinlass
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Fan
- 24: stationäre Stützstruktur
- 26: Welle, Antriebswelle
- 27: Verbindungswelle
- 28: Sonnenrad
- 30: Getriebe
- 32: Planetenräder
- 34: Planetenträger
- 36: Gestänge
- 38: Hohlrad
- 40: Gestänge

- 51: erster Bereich der Kernwelle
- 52: zweiter Bereich der Kernwelle
- 55: Übergangsbereich zwischen Teilen der Kernwelle

- 60: Anbindung / Lagerung der Kernwelle gegenüber statischen Teil
- 61: statisches Teil im Gasturbinentriebwerk
- 62: Verbindung Kernwelle - Getriebe
- 63: Rollenlager

- DA: Durchmesser der Kernwelle am Anschluss zum Getriebe
- D1: Durchmesser erster Bereich der Kernwelle
- d1: Wanddicke erster Bereich
- D2: Durchmesser zweiter Bereich der Kernwelle
- d2: Wanddicke zweiter Bereich

- E: Länge Kernwelle zwischen Getriebe und statischer Anbindung

## Patentansprüche

1. Gasturbinentriebwerk (10) für ein Luftfahrzeug, das Folgendes umfasst:
ein Kerntriebwerk (11), das eine Turbine (19), einen Verdichter (14) und eine die Turbine mit dem Verdichter verbindende Kernwelle (26) umfasst;
einen Fan (23), der stromaufwärts des Kerntriebwerks (11) positioniert ist, wobei der Fan (23) mehrere Fanschaufeln umfasst; und
ein Getriebe (30), das von der Kernwelle (26) antreibbar ist, wobei der Fan (23) mittels des Getriebes (30) mit einer niedrigeren Drehzahl als die Kernwelle (26) antreibbar ist,
**dadurch gekennzeichnet, dass**
die Kernwelle (26) als Antriebswelle für das Getriebe (30) ausgebildet ist und mindestens einen axialen ersten Bereich (51) aufweist, der einen Durchmesser (D1) aufweist, der größer ist als der Durchmesser (D2) mindestens eines axialen zweiten Bereichs (52), wobei der mindestens eine erste Bereich (51) axial zwischen der Antriebseite des Getriebes (30) und einer Lagerung und / oder Anbindung (60) an ein statisches Teil (61) des Gasturbinentriebwerks (10) angeordnet ist.

2. Gasturbinentriebwerk nach Anspruch 1, **dadurch gekennzeichnet, dass** die Kernwelle genau einen ersten Bereich (51) mit einem Durchmesser (D1) aufweist.

3. Gasturbinentriebwerk nach Anspruch 1, **dadurch gekennzeichnet, dass** die Kernwelle eine Mehrzahl von Bereichen (51, 52) mit unterschiedlichen Durchmessern (D1, D2) aufweist.

4. Gasturbinentriebwerk nach mindestens einem der vorhergehenden Ansprüche, **dadurch gekennzeichnet, dass** der Durchmesser (D1) des mindestens einen ersten Bereiches (51) konstant ist oder sich innerhalb des Bereiches (51) ändert.

5. Gasturbinentriebwerk nach mindestens einem der vorhergehenden Ansprüche, **dadurch gekennzeichnet, dass** die Lagerung und / oder Anbindung (60) an den statischen Teil (61) axial im Bereich des Niederdruckverdichters (14) angeordnet ist.

6. Gasturbinentriebwerk nach mindestens einem der vorhergehenden Ansprüche, **dadurch gekennzeichnet, dass** die Lagerung und / oder Anbindung (60) an den statischen Teil (61) im Bereich eines Hubs angeordnet ist.

7. Gasturbinentriebwerk nach mindestens einem der vorhergehenden Ansprüche, **dadurch gekennzeichnet, dass** die Lagerung und / oder Anbindung am statischen Teil (61) mindestens ein Wälzlager, insbesondere ein Rollenlager, aufweist.

8. Gasturbinentriebwerk nach Anspruch 6 oder 7, **dadurch gekennzeichnet, dass** der statische Teil (61) ein Teil eines Gehäuses für das Getriebe (30) und / oder des Kerntriebwerkes (11) ist.

9. Gasturbinentriebwerk nach mindestens einem der vorhergehenden Ansprüche, **dadurch gekennzeichnet, dass** der Durchmesser (DA) der Kernwelle (26) an der Verbindung (62) der Kernwelle (26) zum Getriebe (30) kleiner ist als der Durchmesser (D2) des mindestens einen zweiten Bereiches (52).

10. Gasturbinentriebwerk nach mindestens einem der vorhergehenden Ansprüche, **dadurch gekennzeichnet, dass** mindestens ein Übergangsbereich (55) zwischen den Bereichen (51, 52) mit unterschiedlichen Durchmessern (D1, D2, DA) durch einen radial senkrechten Wellenteil gebildet wird.

11. Gasturbinentriebwerk nach mindestens einem der vorhergehenden Ansprüche, **dadurch gekennzeichnet, dass** mindestens ein Übergangsbereich (55) zwischen den Bereichen (51, 52) mit unterschiedlichen Durchmessern (D1, D2, DA) durch einen Wellenteil gebildet wird, der gegenüber der Hauptdrehachse (9) um 1 bis 15° geneigt ist.

12. Gasturbinentriebwerk nach mindestens einem der vorhergehenden Ansprüche, **dadurch gekennzeichnet, dass** die axiale Erstreckung des mindestens einen ersten Bereichs (51) mehr als 50%, insbesondere mehr als 80%, der axialen Erstreckung (E) der Kernwelle (26) zwischen dem Getriebe (30) und der Lagerung und / oder Anbindung (60) an das statische Teil (61) beträgt.

13. Gasturbinentriebwerk nach mindestens einem der vorhergehenden Ansprüche, **dadurch gekennzeichnet, dass** die Wanddicke (d1) der Kernwelle (26) im mindestens einen ersten Bereich (51) dünner ist als in mindestens einem anderen Bereich der Kernwelle (26), insbesondere dünner als im mindestens einen zweiten Bereich (52) der Kernwelle (26).

14. Gasturbinentriebwerk nach Anspruch 13, **dadurch gekennzeichnet, dass** die Wanddicke (d1) des ersten Bereiches (51) mindestens um einen Faktor 1,5, insbesondere einen Faktor 2 kleiner ist als die Wanddicke in einem anderen Bereich der Kernwelle (26), insbesondere als im mindestens einen zweiten Bereich (52).

15. Gasturbinentriebwerk nach Anspruch 13 oder 14, **dadurch gekennzeichnet, dass** das Verhältnis der Wanddicke (d1) des ersten Bereichs (51) zur axialen Länge des ersten Bereichs (51) im Bereich zwischen 0,02 und 0,08 liegt und / oder das Verhältnis der Wanddicke (d2) des zweiten Bereichs (52) zur axialen Länge des zweiten Bereichs (52) im Bereich zwischen 0,05 und 0,1 liegt.
